# EUROPÄISCHE PATENTSCHRIFT

(11) **EP 0 062 836 B1**
(45) Veröffentlichungstag und Bekanntmachung des Hinweises auf die Patenterteilung: **17.07.1985**
(21) Anmeldenummer: 82102694.5
(22) Anmeldetag: 31.03.1982
(51) Int. Cl.: C07C 161/00, A01N 41/02

(54) **Herbizide Diphenylether, deren Herstellung und Verwendung als Herbizide**
Diphenyl ether herbicides, their preparation and use as herbicides
Herbicides de diphényléther, leur préparation et application comme herbicides

(30) Priorität: 08.04.1981 DE 3114072
(43) Veröffentlichungstag der Anmeldung: 20.10.1982
(73) Patentinhaber: BASF Aktiengesellschaft, 67063 Ludwigshafen (DE)
(72) Erfinder: Parg, Adolf, Dr., D-6702 Bad Duerkheim (DE); Hamprecht, Gerhard, Dr., D-6940 Weinheim (DE); Wuerzer, Bruno, Dr., Dipl.-Landw., D-6701 Otterstadt (DE)

## Beschreibung

Die vorliegende Erfindung betrifft Diphenylether, Verfahren zu ihrer Herstellung, Herbizide, die diese Verbindungen als Wirkstoffe enthalten, sowie ein Verfahren zur Bekämpfung unerwünschten Pflanzenwuchses mit diesen Wirkstoffen.

Es ist bekannt, Diphenyletherverbindungen mit einer substituierten Aminogruppe z. B. 2-Chlor-4-trifluormethyl-3'-methyl-amino-4'-nitrodiphenylether (DE-OS 2 304 006) oder 2-Chlor-4-trifluormethyl-3'-chloracetylamido-4'-nitro-diphenylether (DE-OS 2 311 638) als Herbizide zu verwenden.

Es ist ferner bekannt, Sulfonanilide, die einen Phenoxyphenylrest enthalten, als Herbizide zu verwenden (EP-A-10 249). Die herbizide Wirkung dieser Verbindungen ist jedoch schlecht, so daß die neuen Verbindungen durch sie nicht nahegelegt werden.

Ferner ist es bekannt, Diphenylether mit einer substituierten Sulfonamidgruppe z. B. 2,4,6-Trichlor-3'-N,N-dimethylsulfonamido-4'-nitrodiphenylether (DE-OS 2 261 918, GB-PS 2 001 635, EP-OS 23 725) als Herbizide zu verwenden.

Es wurde gefunden, daß die neuen Diphenylether der Formel I 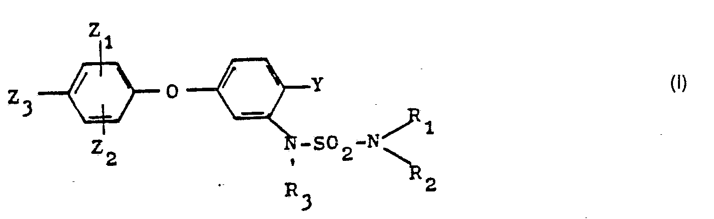 in der
Z₁ und Z₂ jeweils unabhängig voneinander Wasserstoff, Halogen, Nitro, Cyano, Carboxyl, niederes Alkyl, niederes Halogenalkyl oder niederes Alkoxy,
Z₃ Halogen, Nitro, Cyano, niederes Alkyl, niederes Halogenalkyl, niederes Alkoxy, niederes Halogenalkoxy, niederes Alkylmercapto, niederes Halogenalkylmercapto, niederes Alkylsulfinyl, niederes Halogenalkylsulfinyl, niederes Alkylsulfonyl oder niederes Halogenalkylsulfonyl,
Y Halogen, Cyano oder Nitro,
R₁ Wasserstoff, niederes Alkyl, Cycloalkyl, niederes Alkoxy, niederes Halogenalkyl oder niederes Alkoxyalkyl,
R₂ Wasserstoff, niederes Alkyl, Acyl oder ein Alkalimetallatom und
R₃ Wasserstoff, niederes Alkyl oder ein Alkalimetallatom bedeuten, sehr gute herbizide und gegenüber Kulturpflanzen selektive herbizide Wirkungen haben.
Z₁ und Z₂ in der Formel können jeweils unabhängig voneinander beispielsweise Wasserstoff, Fluor, Chlor, Brom, Jod, Nitro, Cyan, Carboxyl, Methyl, Ethyl, n-Propyl, i-Propyl, n-Butyl, tert.-Butyl, Trifluormethyl, Difluormethyl, Fluormethyl, Trichlormethyl, Dichlormethyl, Chlormethyl, Difluorchlormethyl, 1-Chlorethyl, 2-Chlorethyl, 1-Fluorethyl, 2-Fluorethyl, 2,2,2-Trichlorethyl, 2,2,2-Trifluorethyl, 1,1,2,2-Tetrafluorethyl, 1,1,2-Trifluor-2-chlorethyl, 1,1,2,2,2-Pentafluorethyl, Methoxy, Ethoxy, n-Propyloxy, i-Propyloxy oder tert.-Butyloxy, und Z₃ Fluor, Chlor, Brom, Jod, Nitro, Cyan, Methyl, Ethyl, n-Propyl, i-Propyl, n-Butyl, tert.-Butyl, Trifluormethyl, Difluormethyl, Fluormethyl, Trichlormethyl, Dichlormethyl, Chlormethyl, Difluorchlormethyl, 1-Chlorethyl, 2-Chlorethyl, 1-Fluorethyl, 2-Fluorethyl, 2,2,2-Trichlorethyl, 2,2,2-Trifluorethyl, 1,1,2,2-Tetrafluorethyl, 1,1,2-Trifluor-2-chlorethyl, 1,1,2,2,2-Pentafluorethyl, Methoxy, Ethoxy, n-Propyloxy, i-Propyloxy, tert.-Butyloxy, Trichlormethoxy, Trifluormethoxy, 1-Chlorethoxy, 2-Chlorethoxy, 1-Fluorethoxy, 2-Fluorethoxy, 2,2,2-Trichlorethoxy, 2,2,2-Trifluorethoxy, 1,1,2,2-Tetrafluorethoxy, 1,1,2,2,2-Pentafluorethoxy, Methylmercapto, Ethylmercapto, Trichlormethylmercapto, Trifluormethylmercapto, Methylsulfinyl, Ethylsulfinyl, Methylsulfonyl, Ethylsulfonyl oder Trifluormethylsulfonyl bedeuten, Y kann beispielsweise für Fluor, Chlor, Brom, Jod, Cyan oder Nitro und R₁ beispielsweise Wasserstoff, Methyl, Ethyl, n-Propyl, Isopropyl, n-Butyl, lsobutyl, tert.-Butyl, n-Pentyl, n-Hexyl, n-Heptyl, 1,2-Dimethylbutyl, 1,3-Dimethylbutyl, 3-Chlorpentyl, 3-Chlorpropyl, 2-Chlorethyl, 2-Fluorethyl, 1-Chlorpropyl, 2-Chlorpropyl, 1-Fluorethyl, 2-Fluorethyl, 1-Fluorpropyl, Cyclopentyl, Cyclohexyl, Methoxy, Ethoxy, Propoxy, Isopropoxy, n-Butoxy, n-Pentoxy, Methoxymethyl, Ethoxymethyl oder Methoxyethyl, R₂ Wasserstoff, Methyl, Ethyl, n-Propyl, Isopropyl, Acetyl, Chloracetyl, Benzoyl, Natrium oder Kalium und R₃ Wasserstoff, Methyl, Ethyl, Propyl, Natrium oder Kalium bedeuten.

Bevorzugte Diphenylether sind Verbindungen der Formel I, in der Z₁ und Z₂ jeweils unabhängig voneinander Wasserstoff, Chlor, Brom oder Cyan, Z₃ Chlor, Brom, Methyl oder insbesondere Trifluormethyl, R₁ Wasserstoff oder niederes Alkyl, R₂ Wasserstoff oder niederes Alkyl und R₃ Wasserstoff bedeuten.

Die Verbindungen der Formel können beispielsweise nach folgenden Verfahren hergestellt werden :

Man setzt den Diphenylether der allgemeinen Formel II 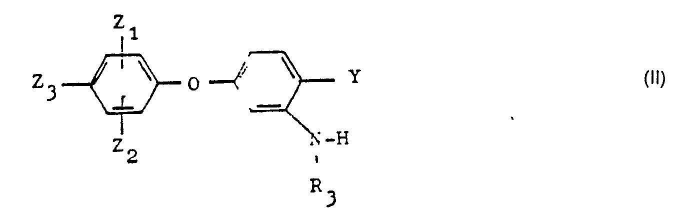
in der Z_{1'} Z₂, Z₃, R₃ und Y die obengenannten Bedeutungen haben, mit einem Sulfamidsäurehalogenid der allgemeinen Formel III 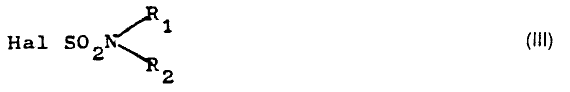
in der R₁ und R₂ die obengenannten Bedeutungen besitzen und Hal für ein Halogenatom steht, in einem inerten organischen Lösungsmittel gegebenenfalls unter Zusatz eines Säureacceptors bei Temperaturen im Bereich von - 80 °C bis + 100 °C, vorteilhaft bei - 40 °C bis + 60 °C, drucklos oder unter Druck, kontinuierlich oder diskontinuierlich, zu den Verbindungen der Formel I um.

Das Verfahren läßt sich z. B. durch folgendes Formelschema wiedergeben :

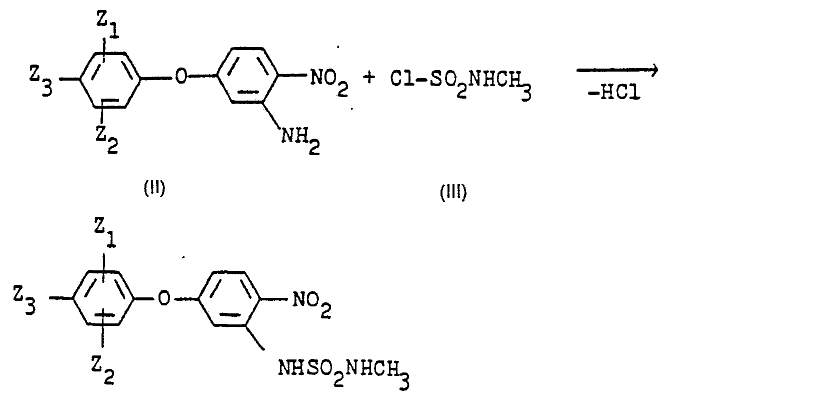

Die Ausgangsstoffe werden z. B. in ungefähr stöchiometrischem Verhältnis zur Reaktion gebracht, d. h. Ausgangsstoff III kann z. B. in einem Überschuß bis zu 20 % (Mol%), bezogen auf II, eingesetzt werden.

Es kann ein Säureacceptor zur Vervollständigung der Reaktion zugesetzt werden. Z. B. wird das Verfahren so durchgeführt, daß man eine Lösung des Sulfamidsäurechlorids III bei - 80 °C bis - 40 °C in einem organischen Lösungsmittel gleichzeitig mit der äquimolaren Menge eines Säureacceptors zu einer Lösung des Diphenylethers II in einem inerten organischen Lösungsmittel zulaufen läßt. Zur Beendigung der Umsetzung rührt man 0,5 bis 48 Stunden, vorzugsweise 2 bis 12 Stunden, bei 0°C bis 30 °C nach. Das Reaktionsgemisch wird eingeengt. Die gewünschten Endstoffe können durch Umfällen, Umkristallisieren oder durch Verrühren mit Wasser isoliert werden, gegebenenfalls können sie durch Chromatographie gereinigt werden.

Man verwendet für die Umsetzung unter den jeweiligen Reaktionsbedingungen inerte organische Lösungsmittel. Als Lösungsmittel kommen z. B. in Frage : Halogenkohlenwasserstoffe, insbesondere Chlorkohlenwasserstoffe, z. B. Tetrachlorethylen, 1,1,2,2- oder 1,1,1,2-Tetrachlorethan, Dichlorpropan, Methylenchlorid, Dichlorbutan, Chloroform, Chlornaphthalin, Dichlornaphthalin, Tetrachlorkohlenstoff, 1,1,1-oder 1.1,2-Trichlorethan, Trichlorethylen, Pentachlorethan, o-, m-, p-Difluorbenzol, 1,2-Dichlorethan, 1,1-Dichlorethan, 1,2-cis-Dichlorethylen, Chlorbenzol, Fluorbenzol, Brombenzol, Jodbenzol, o-, p-und m-Dichlorbenzol, o-, p-, m-Dibrombenzol, o-, m-, p-Chlortoluol, 1,2-4-Trichlorbenzol ; Ether, z. B. Ethylpropylether, Methyl-tert.-butylether, n-Butylethylether, Di-n-butylether, Diisobutylether, Diisoamylether, Diisopropylether, Anisol, Phenetol, Cyclohexylmethylether, Diethylether, Ethylenglykoldimethylether, Tetrahydrofuran, Dioxan, β,β'-Dichlordlethylether ; Nitrokohlenwasserstoffe wie Nitromethan, Nitroethan, Nitrobenzol, o-, m-, p-Chlornitrobenzol, o-Nitrotoluol ; Nitrile wie Acetonitril, Butyronitril, Isobutyronitril, Benzonitril, m-Chlorbenzonitril ; aliphatische oder cycloaliphatische Kohlenwasserstoffe. z. B. Heptan, Pinan, Nonan, o-, m-, p-Cymol, Benzinfraktionen innerhalb eines Siedepunktintervalls von 70 bis 190 °C, Cyclohexan, Methylcyclohexan, Dekalin, Petrolether, Hexan, Ligroin, 2,2,4-Trimethylpentan, 2,2,3-Trimethylpentan, 2,3,3-Trimethylpentan, Octan ; Ester, z. B. Ethylacetat, Acetatessigester, lsobutylacetat; Amide, z. B. Formamid, Methylformamid, Dimethylformamid ; Ketone, Z.B. Aceton, Methylethylketon ; und entsprechende Gemische. Zweckmäßig verwendet man das Lösungsmittel in einer Menge von 100 bis 2 000 Gew.%, vorzugsweise von 200 bis 700 Gew.%, bezogen auf die Ausgangsstoffe.

Als Säureacceptoren können alle üblichen Säurebindemittel verwendet werden. Hierzu gehören vorzugsweise tertiäre Amine, Erdalkaliverbindungen, Ammoniumverbindungen und Alkaliverbindungen sowie entsprechende Gemische. Es können aber auch Zinkverbindungen verwendet werden. Es kommen z. B. folgende basische Verbindungen in Frage : Kaliumhydroxid, Natriumcarbonat, Lithiumhydroxid, Lithiumcarbonat, Natriumbicarbonat, Kaliumbicarbonat, Calciumhydroxid, Calciumoxid, Bariumoxid, Magnesiumhydroxid, Magnesiumoxid, Bariumhydroxid, Calciumcarbonat, Magnesiumcarbonat, Magnesiumbicarbonat, Magnesiumacetat, Zinkhydroxid, Zinkoxid, Zinkcarbonat, Zinkbicarbonat, Zinkacetat, Natriumformiat, Natriumacetat, Trimethylamin, Triethylamin, Tripropylamin, Triisopropylamin, Tributylamin, Triisobutylamin, Tri-sec.-butylamin, Tri-tert.-butylamin, Tribenzylamin, Tricyclohexylamin, Triamylamin, Diisopropylethalamin, Trihexylamin, N,N-Dimethylanilin, N,N-Diethylanilin, N,N-Dipropyltoluidin, N,N-Dimethyl-p-aminopyridin, N-Methylpyrrolidon, N-Ethylpyrrolidon, N-Methylpiperidin, N-Ethylpiperidin, N-Methylpyrrolidin, N-Ethylpyrrolidin, N-Methylimidazol, N-Ethylimidazol, N-Methylpyrrol, N-Ethylpyrrol, N-Methylmorpholin, N-Ethylmorpholin, N-Methylhexamethylenimin, N-Ethylhexamethylenimin, Pyridin, Chinolin, a-Picolin, β-Picolin, y-Picolin, isochinolin, Pyrimidin, Acridin, N,N,N',N'-Tetramethylethylendiamin, N,N,N',N'-Tetraethylethylendiamin, Chinoxalin, Chinazolin, N-Propyldiisopropylamin, N,N'-Dimethylcyclohexylamin, 2,6-Lutidin, 2,4₋Lutidin, Trifurylamin, Triethylendiamin.

Die Ausgangsverbindungen können nach bekannten Methoden hergestellt werden. So erfolgt die Darstellung der Diphenylether der allgemeinen Formel II beispielsweise nach der in der DE-OS 29 26 829 beschriebenen Verfahrensweise. Für die Herstellung der Sulfamidsäurehalogenide eignen sich die Methoden, wie sie z. B. in der DE-OS 21 64 176 beschrieben sind.

Die folgenden Beispiele erläutern die Herstellung der Verbindungen der Formel I nach dem angegebenen Verfahren. Gewichtsteile verhalten sich zu Volumenteilen wie kg zu 1.

### Beispiel 1

Zu einer Lösung von 33,3 Gewichtsteilen 3-(2'-Chlor-4'-trifluormethylphenoxy)-6-nitro-anilin in 200 Volumenteilen absolutem Ether tropft man gleichzeitig 15,7 Gewichtsteile Isopropylamidosulfonylchlorid und 10,1 Gewichtsteile Triethylamin bei einer Temperatur von - 60 °C bis - 40 °C zu. Man erwärmt die Reaktionsmischung zunächst langsam auf Raumtemperatur, rührt dann zwei Stunden bei 30 °C und saugt ab. Die organische Phase wird dann nacheinander mit verdünnter Salzsäure, wäßriger Natriumbicarbonatlösung und Wasser behandelt, mit Magnesiumsulfat getrocknet, abfiltriert und eingeengt. Man erhält 36 Gewichtsteile (85% der Theorie) N-3-(2'-Chlor-4'-trifluormethylphenoxy)-6-nitro-phenyl-N'- isopropylsulfamid (Verbindung Nr. 1) mit dem Brechungsindex n_{D}²⁵ : 1,5748 mit der Formel

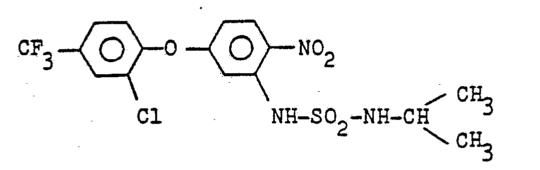

### Beispiel 2

10 Gewichtsteile N-3-(2'-Chlor-4-trifluormethylphenoxy)-6-nitrophenyl-N'-isopropylsulfamid werden in 100 Volumenteilen absolutem Methanol gelöst, mit 4 Gewichtsteilen 30%iger methanolischer Natriummethylatlösung versetzt und die Lösung unter Vakuum zur Trockne eingeengt. Man erhält 10 Gewichtsteile Natriumsalz des N-3-(2'-Chlor-4-trifluormethylphenoxy)-6-nitro-phenyl-N'-Isopropylsulfa- mids (Verbindung Nr. 2) mit dem Zersetzungspunkt 160 °C mit der Formel 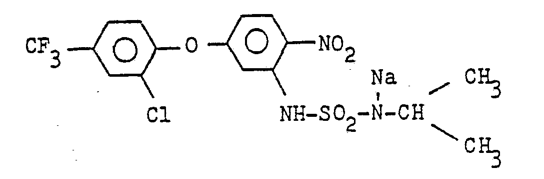
Entsprechend lassen sich beispielsweise folgende Verbindungen der Formel I herstellen.

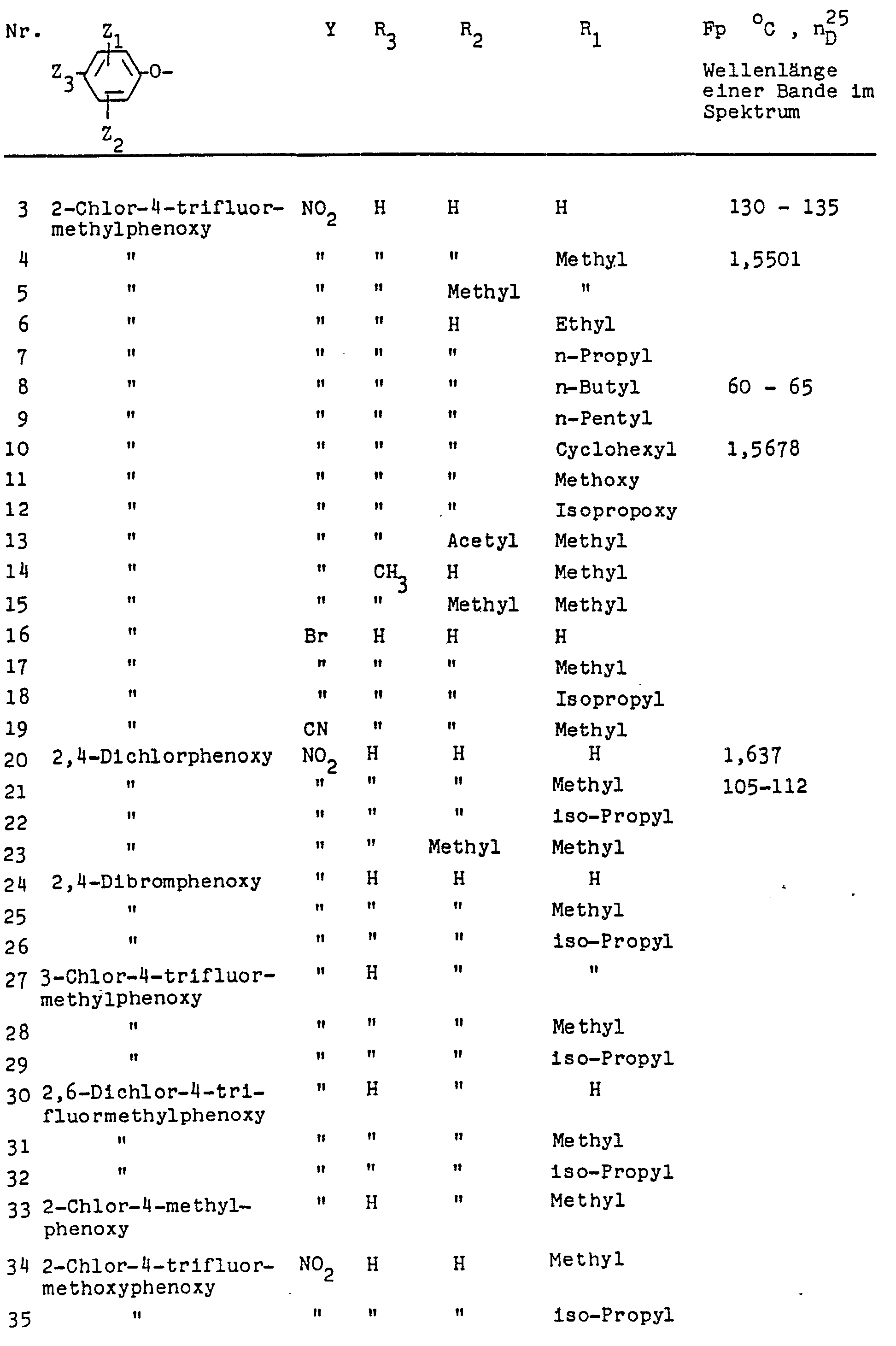

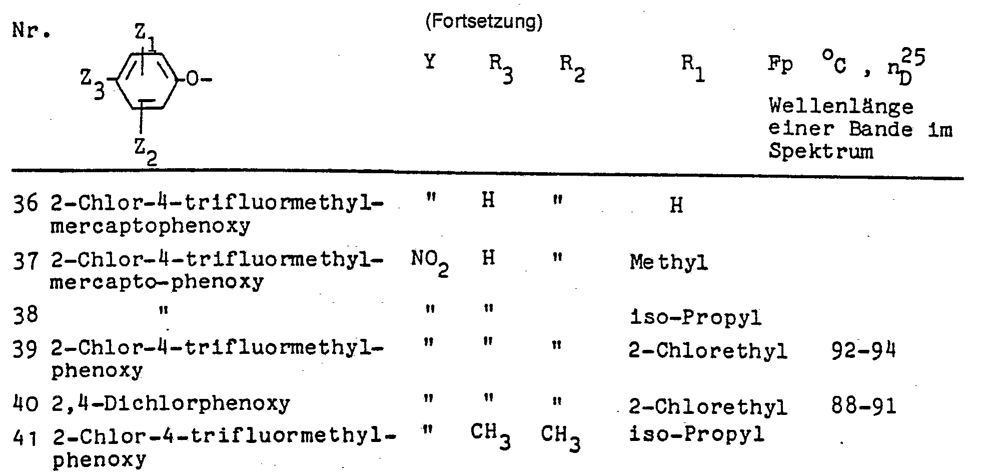

Die neuen Substanzen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken ; sie sollen in jedem Fall eine feine und gleichmäßige Verteilung der wirksamen Substanz gewährleisten. Die Formulierungen werden in bekannter Weise hergestellt, z. B. durch Verstrecken des Wirkstoffs mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage : Lösungsmittel wie Aromaten (z. B. Xylol, Benzol), chlorierte Aromaten (z. B. Chlorbenzole), Paraffine (z. B. Erdölfraktionen), Alkohole (z. B. Methanol, Butanol), Amine oder Amide (z. B. Ethanolamin, Dimethylformamid) und Wasser ; Trägerstoffe wie natürliche Gesteinsmehle, z. B. Kaoline, Tonerden, Talkum, Kreide und synthetische Gesteinsmehle (z. B. hochdisperse Kieselsäure, Silikate) ; Emulgiermittel, wie nichtionogene und anionische Emulgatoren (z. B. Polyoxyethylen - Fettalkohole - Ether, Alkylsulfonate und Arylsulfonate) und Dispergiermittel, wie Lignin, Sulfitablaugen und Methylcellulose.

Die herbiziden Mittel enthalten 0,1 bis 95 Gew.% Wirkstoff, vorzugsweise 0,5 bis 90 Gew.%.

Die Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweise durch Versprühen, Vernebeln, Verstäuben, Verstreuen oder Gießen.

Beispiele für solche Zubereitungen sind :

### Beispiel I

Man vermischt 90 Gewichtsteile der Verbindung 1 mit 10 Gewichtsteilen N-Methyl-alpha-pyrrolidon und erhält eine Lösung, die zur Anwendung in Form kleinster Tropfen geeignet ist.

### Beispiel 11

10 Gewichtsteile der Verbindung 2 werden in einer Mischung gelöst, die aus 90 Gewichlsteilen Xylol, 6 Gewichtsteilen des Anlagerungsproduktes von 8 bis 10 Mol Ethylenoxid an 1 Mol Ölsäure-N-monoethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht.

### Beispiel 111

20 Gewichtsteile der Verbindung 2 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol lsooctylphenol und 5 Gewichtsteilen des Anlagerungsproduktes von 40 Mol Ethylenoxid an 1 Mol Ricinusöl besteht.

### Beispiel IV

20 Gewichtsteile der Verbindung werden in einer Mischung gelöst, die aus 25 Gewichtsteilen Cyclohexanon, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht.

### Beispiel V

80 Gewichtsteile des Wirkstoffs 1 werden mit 3 Gewichtsteilen des Natriumsalzes der Diisobutylnaphthalin-alphasulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

### Beispiel VI

5 Gewichtsteile der Verbindung 1 werden mit 95 Gewichtsteilen feinteiligem Kaolin innig vermischt. Man erhält auf diese Weise ein Stäubemittel, das 5 Gewichtsprozent des Wirkstoffs enthält.

### Beispiel VII

30 Gewichtsprozent der Verbindung 1 werden mit einer Mischung aus 92 Gewichtsteilen pulverförmigem Kieselsäuregel und 8 Gewichtsteilen Paraffinöl, das.auf die Oberfläche dieses Kieselsäuregels gesprüht wurde, innig vermischt. Man erhält auf diese Weise eine Aufbereitung des Wirkstoffs mit guter Haftfähigkeit.

### Beispiel VIII

40 Gewichtsteile des Wirkstoffs 1 werden mit 10 Teilen Natriumsalz eines Phenolsulfonsäureharnstoff-formaldehyd-kondensats, 2 Teilen Kieselgel und 48 Teilen Wasser innig vermischt. Man erhält eine stabile wäßrige Dispersion.

### Beispiel IX

20 Teile des Wirkstoffs 1 werden mit 12 Teilen Calciumsalz der Dodecylbenzolsulfonsäure, 8 Teile Fettalkoholpolyglykolether, 2 Teilen Natriumsalz eines Phenolsulfonsäure-harnstoff-formaldehyd-kondensats und 68 Teilen eines paraffinischen Mineralöls innig vermischt. Man erhält eine stabile ölige Dispersion.

Die Anwendung kann im Vorauflaufverfahren oder bei Nachauflaufanwendung erfolgen. Vorzugsweise werden die neuen Wirkstoffe nach dem Auflaufen der unerwünschten Pflanzen, sowohl auf Kulturflächen als auch auf unbebautem Land, ausgebracht. Sind die Wirkstoffe für gewisse Kulturpflanzen weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die Aufwandmengen an Wirkstoff betragen je nach Jahreszeit und Wachstumsstadium 0,025 bis 15 kg/ha und mehr.

Der Einfluß von Vertretern der neuen herbiziden Diphenylether auf das Wachstum von erwünschten und unerwünschten Pflanzen wird anhand von Gewächshausversuchen vorgeführt :
Als Kulturgefäße dienten Plastikblumentöpfe mit 300 cm³ Inhalt und lehmigem Sand mit etwa 1,5 % Humus als Substrat. Die Samen der Testpflanzen wurden nach Arten getrennt flach eingesät. Unmittelbar danach erfolgte bei Vorauflaufbehandlung das Aufbringen der Wirkstoffe auf die Erdoberfläche. Sie wurden hierbei in Wasser als Verteilungsmittel suspendiert oder emulgiert und mittels fein verteilender Düsen gespritzt. Bei dieser Applikationsmethode handelt es sich um eine Aufwandmenge entsprechend 3,0 kg Wirkstoff/ha. Nach dem Aufbringen der Mittel wurden die Gefäße leicht beregnet, um Keimung und Wachstum in Gang zu bringen. Danach deckte man die Gefäße mit durchsichtigen Plastikhauben ab, bis die Pflanzen angewachsen waren. Diese Abdeckung bewirkte ein gleichmäßiges Keimen der Testpflanzen, sofern dies nicht durch die Wirkstoffe beeinträchtigt wurde.

Zum Zwecke der Nachauflaufbehandlung zog man die Testpflanzen je nach Wuchsform erst bis zu einer Wuchshöhe von 3 bis 15 cm an und behandelte sie danach. Zur Nachauflaufbehandlung wurden entweder direkt gesäte und in den gleichen Gefäßen aufgewachsene Pflanzen ausgewählt, oder sie wurden erst als Keimpflanzen getrennt angezogen und einige Tage vor der Behandlung in die Versuchsgefäße verpflanzt. Die Aufwandmengen für die Nachauflaufbehandlung variieren je nach Wirkstoff. Sie betrugen im Einzelfall 0,125 und 0,06 kg Wirkstoff je ha. Auch 3,0 kg Wirkstoff je ha wurden eingesetzt.

Als Vergleichsmittel wurden folgende bekannte Verbindungen verwendet : 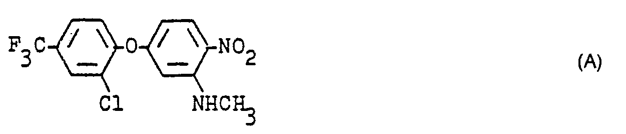 mit 0,125 kg Wirkstoff/ha und 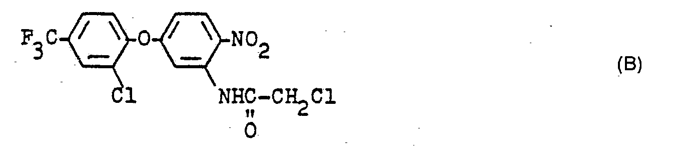 mit 0,5 kg Wirkstoff/ha.

Eine Abdeckung unterblieb bei der Nachauflaufbehandlung. Die Aufstellung der Versuche erfolgte im Gewächshaus, wobei für wärmeliebende Arten wärmere Bereiche (20 bis 35°C) und für solche gemäßigter Klimate 10 bis 25 °C bevorzugt wurden. Die Versuchsperiode erstreckte sich über 2 bis 4 Wochen. Während dieser Zeit wurden die Pflanzen gepflegt und ihre Reaktion auf die einzelnen Behandlungen ausgewertet. Bewertet wurde nach einer Skala von 0 bis 100. Dabei bedeutet 0 keine Schädigung oder normaler Ablauf und 100 kein Aufgang der Pflanzen bzw. völlige Zerstörung zumindest der oberirdischen Teile.

Bei der Prüfung der herbiziden Wirkung bei Vorauflaufanwendung im Gewächshaus bei Aufwandmengen von 3,0 kg Wirkstoff/ha zeigten die neuen Verbindungen 4, 3, 2 eine sehr gute herbizide Wirkung.

Bei der Prüfung auf selektive herbizide Wirkung bei Nachauflaufanwendung im Gewächshaus erbrachte der Wirkstoff Nr. 4 mit 0,125 kg gegen einzelne breitblättrige Unkrautarten eine sehr gute herbizide Aktivität bei einer gleichzeitig wesentlich besseren Verträglichkeit für Getreide als die bekannten Vergleichssubstanzen A und B.

Die Selektivität der erfindungsgemäßen Verbindung für Getreide ist gut, während die Schädigungen durch die Vergleichsverbindungen sehr stark und nicht mehr akzeptabel sind, weshalb deren gute herbizide Aktivität für diesen Einsatzbereich wenig nutzt.

Bei der Prüfung auf selektive herbizide Wirkung bei Nachauflaufanwendung im Gewächshaus zeigte der Wirkstoff Nr. 4 eine gute Verträglichkeit gegenüber Sonnenblumen bei gleichzeitig ausgezeichneter herbizider Aktivität.

Gleichfalls in Gewächshausversuchen bekämpfte der Wirkstoff Nr. 39 bei Nachauflaufanwendung von 0,06 und 0,125 kg Wirkstoff/ha die breitblättrigen Unkräuter sehr gut ohne oder mit nur geringen und temporären Schädigungen an der Kulturpflanze Sonnenblumen.

In weiteren Gewächshausversuchen hatten die Verbindungen Nr. 8, 10, 22, 21, 40 und 41 mit 3,0 kg Wirkstoff je ha eine herbizide Aktivität gegen unerwünschte Pflanzen.

Angesichts der Vielseitigkeit der Anwendungsmethoden (Vorauflauf, Nachauflaufblattbehandlung, Unterblattspritzung) kommen viele Kulturen als Einsatzgebiete in Betracht. Solche sind beispielsweise :

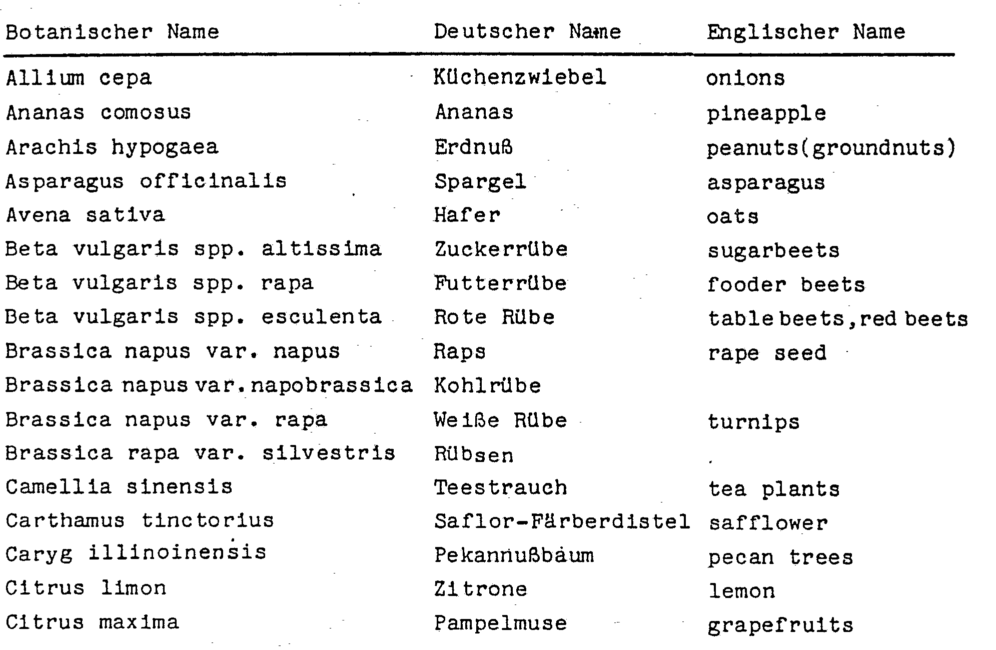

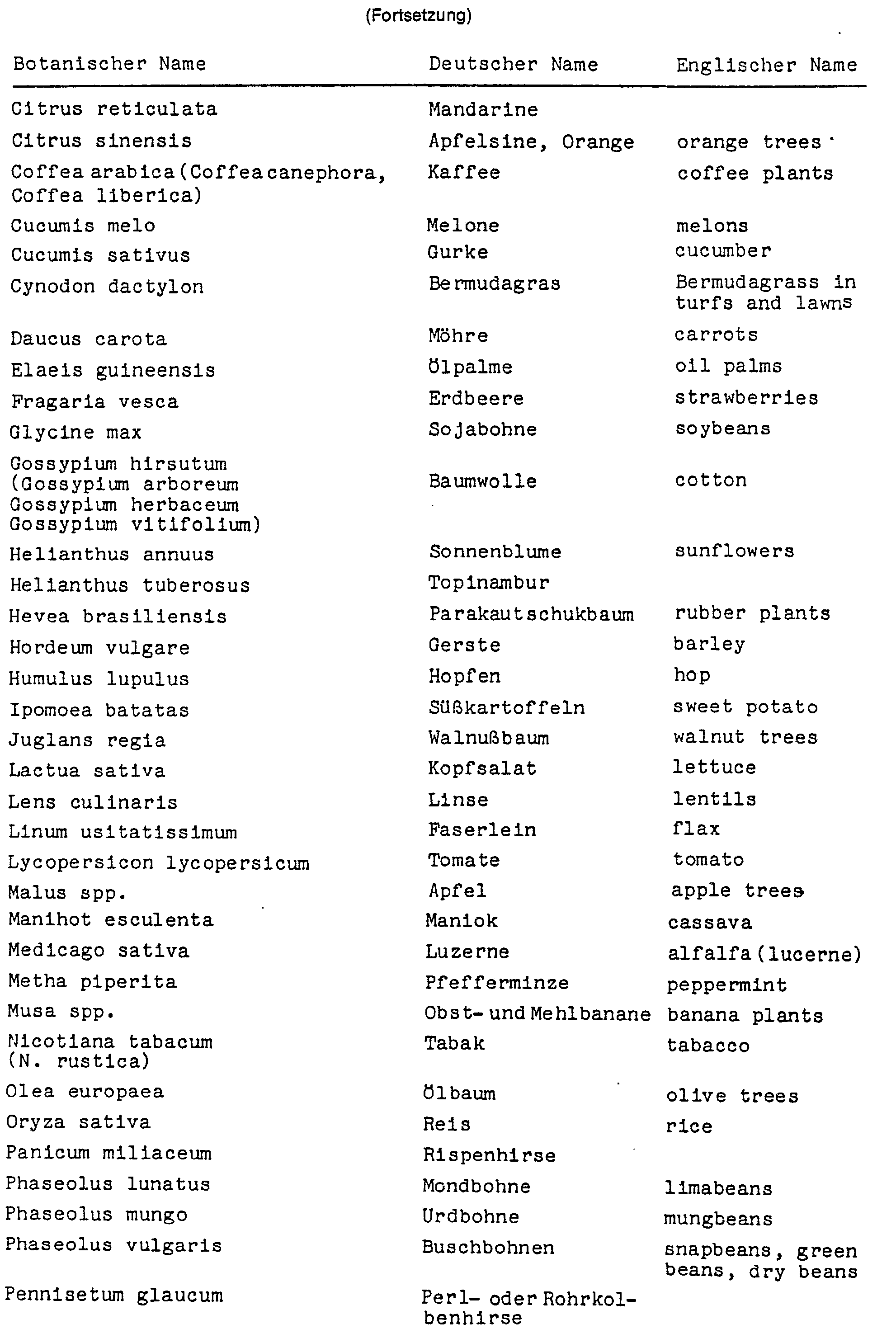

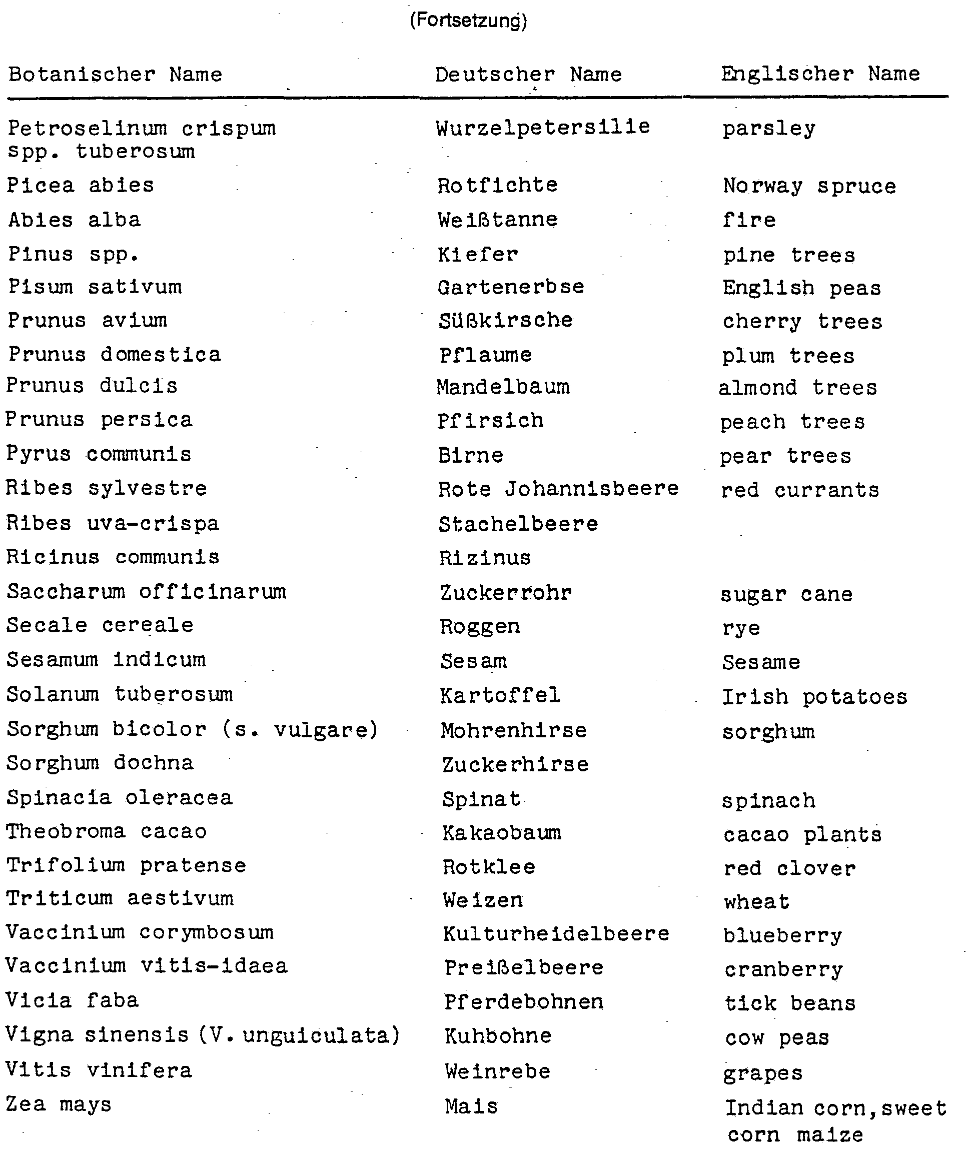

Zur Verbreiterung des Wirkungsspektrums und zur Erzielung synergistischer Effekte können die neuen Diphenyletherderivate sowohl unter sich als auch mit zahlreichen Vertretern anderer herbizider oder wachstumsregulierender Wirkstoffgruppen gemischt und gemeinsam ausgebracht werden. Beispielsweise kommen als Mischungspartner Diazine, 4 H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triazinone, Uracile, Benzofuranderivate, Cyclohexan-1,3-dionderivate und andere in Betracht.

Außerdem ist es nützlich, die neuen Verbindungen allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs-oder Spurenelementmängeln eingesetzt werden. Es können auch nichtphytotoxische Öle und Ölkonzentrate zugesetzt werden.

## Patentansprüche (Patentansprüche für folgende(n) Vertragsstaat(en) : BE, CH, DE, FR, GB, IT, LI, LU, NL, SE)

1. Diphenylether der Formel 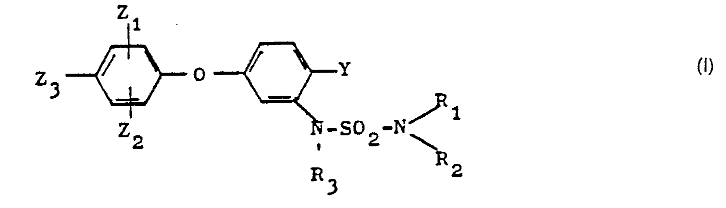 in der
Z₁ und Z₂ jeweils unabhängig voneinander Wasserstoff, Halogen, Nitro, Cyano, Carboxyl, niederes Alkyl, niederes Halogenalkyl oder niederes Alkoxy,
Z₃ Halogen, Nitro, Cyano, niederes Alkyl, niederes Halogenalkyl, niederes Alkoxy, niederes Halogenalkoxy, niederes Alkylmercapto, niederes Halogenalkylmercapto, niederes Alkylsulfinyl, niederes Halogenalkylsulfinyl, niederes Alkylsulfonyl oder niederes Halogenalkylsulfonyl,
Y Halogen, Cyano oder Nitro,
R₁ Wasserstoff, niederes Alkyl, Cycloalkyl, niederes Alkoxy, niederes Halogenalkyl oder niederes Alkoxyalkyl,
R₂ Wasserstoff, niederes Alkyl, Acyl oder ein Alkalimetallatom und
R₃ Wasserstoff, niederes Alkyl oder ein Alkalimetallatom bedeuten.
2. Diphenylether gemäß Anspruch 1, dadurch gekennzeichnet, daß Z, und Z₂ Wasserstoff, Chlor, Brom oder Cyan, Z₃ Chlor, Brom, Trifluormethyl oder Methyl, Y Nitro, Halogen oder Cyano, R₁ Wasserstoff oder niederes Alkyl, R₂ Wasserstoff oder niederes Alkyl und R₃ Wasserstoff bedeuten.

3. Herbizid, enthaltend einen Diphenylether gemäß Anspruch 1.

4. Herbizid, enthaltend einen festen oder flüssigen Trägerstoff und einen Diphenylether gemäß Anspruch 1.

5. Verfahren zur Herstellung eines Herbizids, dadurch gekennzeichnet, daß man einen festen oder flüssigen Trägerstoffvermischt mit einem Diphenylether gemäß Anspruch 1.

6. Verfahren zur Bekämpfung von unerwünschten Pflanzen, dadurch gekennzeichnet, daß man die Pflanzen oder den Boden behandelt mit einem Diphenylether gemäß Anspruch 1.

7. Verfahren zur Herstellung eines Diphenylethers gemäß Anspruch 1, dadurch gekennzeichnet, daß man einen Diphenylether der allgemeinen Formel II 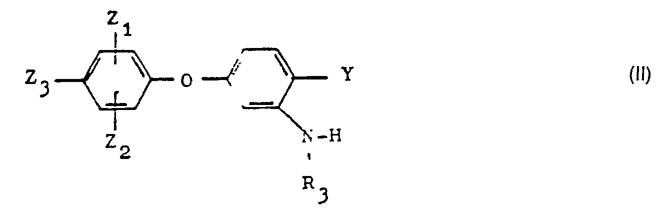 in der Z_{1'} Z₂, Z₃, R₃ und Y die im Anspruch 1 genannten Bedeutungen haben, mit einem Sulfamidsäurehalogenid der allgemeinen Formel III 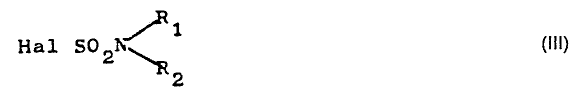 in der R₁ und R₂ die im Anspruch 1 genannten Bedeutungen besitzen und Hal für ein Halogenatom steht, in einem inerten organischen Lösungsmittel bei Temperaturen im Bereich von - 80 °C bis + 100 °C umsetzt.

8. Diphenylether ausgewählt aus der Gruppe bestehend aus N-3-(2'-Chlor-4'-trifluormethylpheno- xy)-6-nitrophenyl-sulfamid, N-3-(2'-Chlor-4'-trifluormethylphenoxy)-6-nitro-phenyl-N'-methyl-sulfamid oder N-3-(2'-Chlor-4'-trifluormethylphenoxy)-6-nitrophenyl-N'-isopropyl-sulfamid.

9. Herbizid enthaltend einen Diphenylether ausgewählt aus der Gruppe bestehend aus N-3-(2'-Chlor-4'-trifluormethylphenoxy)-6-nitro-phenyl-sulfamid, N-3-(2'-Chlor-4'-trifluormethylphenoxy)-6-nitro-phenyl-N'-methyl-sulfamid oder N-3-(2'-Chlor-4'-trifluormethylphenoxy)-6-nitro-phenyl-N'-isopropylsulfa- mid.

## Patentansprüche (Patentansprüche für folgende(n) Vertragsstaat(en) : AT)

1. Herbizid, enthaltend einen Diphenylether der Formel 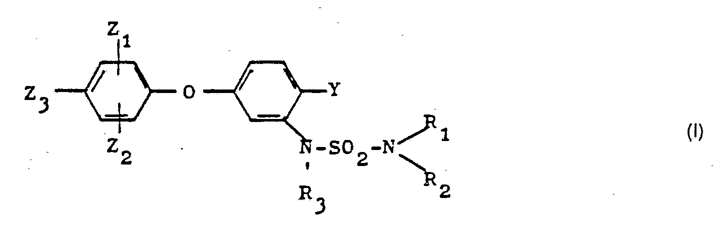 in der
Z₁ und Z₂ jeweils unabhängig voneinander Wasserstoff, Halogen, Nitro, Cyano, Carboxyl, niederes Alkyl, niederes Halogenalkyl oder niederes Alkoxy,
Z₃ Halogen, Nitro, Cyano, niederes Alkyl, niederes Halogenalkyl, niederes Alkoxy, niederes Halogenalkoxy, niederes Alkylmercapto, niederes Halogenalkylmercapto, niederes Alkylsulfinyl, niederes Halogenalkylsulfinyl, niederes Alkylsulfonyl oder niederes Halogenalkylsulfonyl,
Y Halogen, Cyano oder Nitro,
R₁ Wasserstoff, niederes Alkyl, Cycloalkyl, niederes Alkoxy, niederes Halogenalkyl oder niederes Alkoxyalkyl,
R₂ Wasserstoff, niederes Alkyl, Acyl oder ein Alkalimetallatom und
R₃ Wasserstoff, niederes Alkyl oder ein Alkalimetallatom bedeuten.

2. Herbizid gemäß Anspruch 1, dadurch gekennzeichnet, daß
Z, und Z₂ Wasserstoff, Chlor, Brom oder Cyan,
Z₃ Chlor, Brom, Trifluormethyl oder Methyl,
Y Nitro, Halogen oder Cyano,
R₁ Wasserstoff oder niederes Alkyl,
R₂ Wasserstoff oder niederes Alkyl und
R₃ Wasserstoff bedeuten.

3. Herbizid, enthaltend einen festen oder flüssigen Trägerstoff und einen Diphenylether gemäß Anspruch 1.

4. Verfahren zur Herstellung eines Herbizids, dadurch gekennzeichnet, daß man einen festen oder flüssigen Trägerstoffvermischt mit einem Diphenylether gemäß Anspruch 1.

5. Verfahren zur Bekämpfung von unerwünschten Pflanzen, dadurch gekennzeichnet, daß man die Pflanzen oder den Boden behandelt mit einem Diphenylether gemäß Anspruch 1.

6. Verfahren zur Herstellung eines Diphenylethers gemäß Anspruch 1, dadurch gekennzeichnet, daß man einen Diphenylether der allgemeinen Formel II 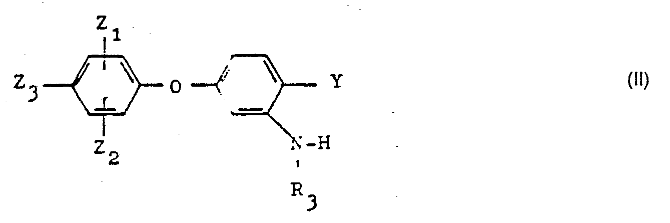 in der Z_{1'} Z₂, Z₃, R₃ und Y die im Anspruch 1 genannten Bedeutungen haben, mit einem Sulfamidsäurehalogenid der allgemeinen Formel III 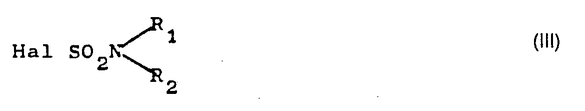 in der R₁ und R₂ die im Anspruch 1 genannten Bedeutungen besitzen und Hal für ein Halogenatom steht, in einem inerten organischen Lösungsmittel bei Temperaturen im Bereich von - 80 °C bis + 100 °C umsetzt.

7. Herbizid, enthaltend einen Diphenylether ausgewählt aus der Gruppe bestehend aus N-3-(2'-Chlor-4'-trifluormethylphenoxy)-6-nitro-phenyl-sulfamid, N-3-(2'-Chlor-4'-trifluormethylphenoxy)-6-nitro-phenyl-N'-methyl-sulfamid oder N-3-(2'-Chlor-4'-trifluormethylphenoxy)-6-nitro-phenyl-N'-isopro- pylsulfamid.

## Claims (Claims for the following Contracting State(s) : BE, CH, DE, FR, GB, IT, LI, LU, NL, SE)

1. A diphenyl ether of the formula 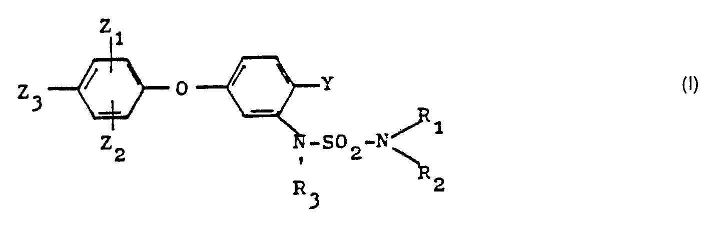 where
Z₁ and Z₂ independently of one another are hydrogen, halogen, nitro, cyano, carboxyl, lower alkyl, lower haloalkyl or lower alkoxy,
Z₃ is halogen, nitro, cyano, lower alkyl, lower haloalkyl, lower alkoxy, lower haloalkoxy, lower alkylmercapto, lower haloalkylmercapto, lower alkylsulfinyl, lower haloalkylsufinyl, lower alkylsulfonyl or lower haloalkylsulfonyl,
Y is halogen, cyano or nitro,
R₁ is hydrogen, lower alkyl, cycloalkyl, lower alkoxy, lower haloalkyl or lower alkoxyalkyl,
R₂ is hydrogen, lower alkyl, acyl or an alkali metal atom, and
R₃ is hydrogen, lower alkyl or an alkali metal atom.
2. A diphenyl ether as claimed in claim 1, wherein
Z₁ and Z₂ are each hydrogen, chlorine, bromine or cyano,
Z₃ is chlorine, bromine, trifluoromethyl or methyl,
Y is nitro, halogen or cyano,
R₁ is hydrogen or lower alkyl,
R₂ is hydrogen or lower alkyl, and
R₃ is hydrogen.
3. A herbicide containing a diphenyl ether as claimed in claim 1.
4. A herbicide containing a solid or liquid carrier and a diphenyl ether as claimed in claim 1.
5. A process for producing a herbicide, wherein a solid or liquid carrier is mixed with a diphenyl ether as claimed in claim 1.
6. A process for combating unwanted plants, wherein the plants or the soil are treated with a diphenyl ether as claimed in claim 1.
7. A process for preparing a diphenyl ether as claimed in claim 1, wherein a diphenyl ether of the general formula II 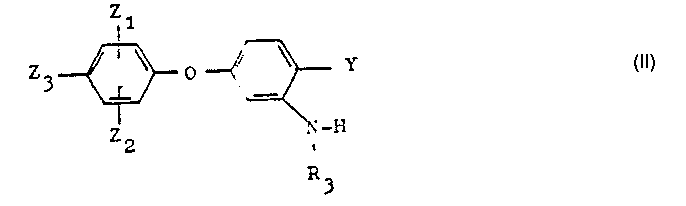
where Z_{1'} Z₂, Z₃, R₃, and Y have the meanings given in claim 1, is reacted with a sulfamyl halide of the general formula III 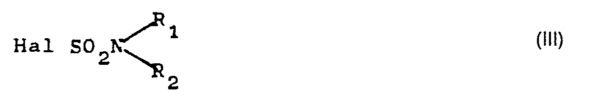 where R₁ and R₂ have the meanings given in claim 1, and Hal is halogen, in an inert organic solvent and at from - 80° to + 100°C.

8. A diphenyl ether selected from the group consisting of N-3-(2'-chloro-4'-trifluoromethylphenoxy)-6-nitrophenylsulfamide, N-3-(2'-chloro-4'-trifluoromethylphenoxy)-6-nitrophenyl-N'-methyl-sulfamide and N-3-(2'-chloro-4'-trifluoromethylphenoxy)-6-nitrophenyl-N'-isopropyl-sulfamide.

9. A herbicide containing a diphenyl ether selected firom the group consisting of N-3-(2'-chloro-4'-trifluoromethylphenoxy)-6-nitrophenyl-sulfamide, N-3-(2'-chloro-4'-trifluoromethylphenoxy)-6-nitrophenyl-N'-methyl-sulfamide and N-3-(2'-chloro-4'-trifluoromethylphenoxy)-6-nitrophenyl-N'-isop- ropy!-sulfamide.

## Claims (Claims for the following Contracting State(s) : AT)

1. A herbicide containing a diphenyl ether of the formula 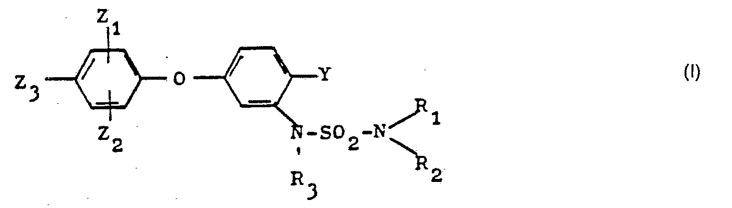 where
Z₁ and Z₂ independently of one another are hydrogen, halogen, nitro, cyano, carboxyl, lower alkyl, lower haloalkyl or lower alkoxy,
Z₃ is halogen, nitro, cyano, lower alkyl, lower haloalkyl, lower alkoxy, lower haloalkoxy, lower alkylmercapto, lower haloalkylmercapto, lower alkylsulfinyl, lower haloalkylsulfinyl, lower alkylsulfonyl or lower haloalkylsulfonyl,
Y is halogen, cyano or nitro,
R₁ is hydrogen, lower alkyl, cycloalkyl, lower alkoxy, lower haloalkyl or lower alkoxyalkyl,
R₂ is hydrogen, lower alkyl, acyl or an alkali metal atom, and
R₃ is hydrogen, lower alkyl or an alkali metal atom.
2. A herbicide as claimed in claim 1, wherein
Z₁ and Z₂ are each hydrogen, chlorine, bromine or cyano,
Z₃ is chlorine, bromine, trifluoromethyl or methyl,
Y is nitro, halogen or cyano,
R₁ is hydrogen or lower alkyl,
R₂ is hydrogen or lower alkyl, and
R₃. is hydrogen.

3. A herbicide containing a solid or liquid carrier and a diphenyl ether as defined in claim 1.

4. A process for producing a herbicide, wherein a solid or liquid carrier is mixed with a diphenyl ether as defined in claim 1.

5. A process for combating unwanted plants, wherein the plants or the soil are treated with a diphenyl ether as defined in claim 1.

6. A process for preparing a diphenyl ether as defined in claim 1, wherein a diphenyl ether of the general formula II 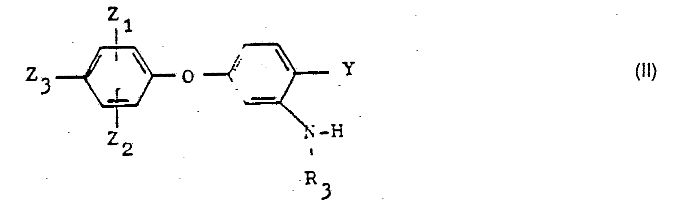 where Z_{1'} Z2, Z₃, R₃, and Y have the meanings given in claim 1, is reacted with a sulfamyl halide of the general formula III 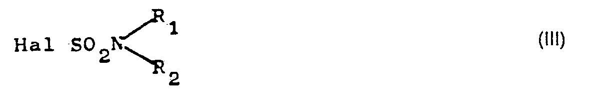 where R₁ and R₂ have the meanings given in claim 1, and Hal is halogen, in an inert organic solvent and at from - 80° to + 100°C.

7. A herbicide containing a diphenyl ether selected from the group consisting of N-3-(2'-chloro-4'-trifluoromethylphenoxy)-6-nitrophenyl-sulfamide, N-3-(2'-chloro-4'-trifluoromethylphenoxy)-6-nitrophenyl-N'-methyl-sulfamide and N-3-(2'-chloro-4'-trifluoromethylphenoxy)-6-nitrophenyl-N'-isopropyl-sulfamide.

## Revendications (Revendications pour l'(les) Etat(s) contractant(s) suivant(s) : BE, CH, DE, FR, GB, IT, LI, LU, NL, SE)

1. Diphényléther de formule 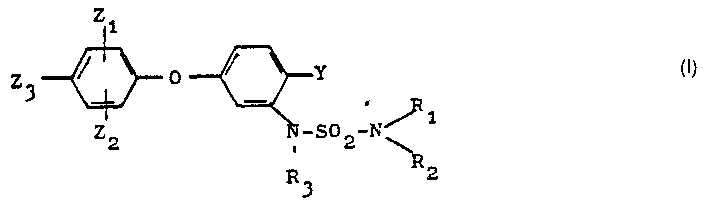 dans laquelle
Z₁ et Z₂ représentent chacun, indépendamment l'un de l'autre, hydrogène, nitro, cyano, carboxyle, alkyle inférieur, halogénoalkyle inférieur, ou alcoxy inférieur,
Z₃ représente halogène, nitro, cyano, alkyle inférieur, halogénoalkyle inférieur, alcoxy inférieur, halogénoalcoxy inférieur, alkylmercapto inférieur, halogénoalkylmercapto inférieur, alkylsulfinyle inférieur, halogénoalkylsulfinyle inférieur, alkylsulfonyle inférieur, ou halogénoalkylsulfonyle inférieur,
Y représente halogène, cyano ou nitro,
R₁ hydrogène, alkyle inférieur, cycloalkyle, alcoxy inférieur, halogénoalkyle inférieur ou alcoxyalkyle inférieur,
R₂ hydrogène, alkyle inférieur, acyle ou un atome de métal alcalin et
R₃ hydrogène, alkyle inférieur, ou un atome de métal alcalin.

2. Diphényléther selon la revendication 1, caractérisé par le fait que
Z₁ et Z₂ représentent hydrogène, chlore, brome ou cyano,
Z₃ chlore, brome, trifluorométhyle ou méthyle,
Y nitro, halogène ou cyano,
R₁ hydrogène ou alkyle inférieur,
R₂ hydrogène ou alkyle inférieur et
R₃ hydrogène.

3. Herbicide contenant un diphényléther selon la revendication 1.

4. Herbicide contenant un support solide ou liquide et un diphényléther selon la revendication 1.

5. Procédé de préparation d'un herbicide, caractérisé par le fait qu'on mélange un support solide ou liquide et un diphényléther selon la revendication 1.

6. Procédé de lutte contre les plantes indésirables, caractérisé par le fait qu'on traite les plantes ou le sol avec un diphényléther selon la revendication 1.

7. Procédé de préparation d'un diphényléther selon la revendication 1, caractérisé par le fait qu'on fait réagir, dans un solvant organique inerte à des températures comprises entre - 80 °C et + 100 °C, un diphényléther de formule générale Il 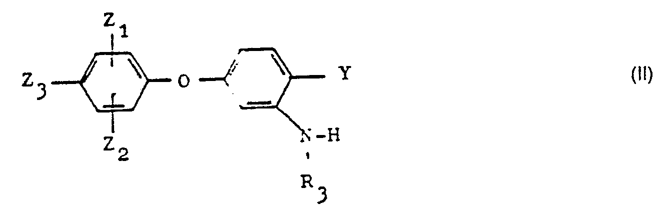 dans laquelle Z_{1'} Z₂, Z₃, R₃ et Y ont les significations indiquées dans la revendication 1, avec un halogénure d'acide sulfamidique de formule générale III 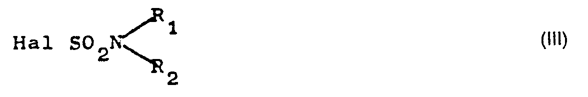 dans laquelle R₁ et R₂ ont les significations indiquées dans la revendication 1, et Hal représente un atome d'halogène.

8. Diphényléther choisi dans le groupe constitué de N-3-(2'-chloro-4'-trifluorométhylphénoxy)-6-nitro-phényl-sulfamide, N-3-(2'-chloro-4'-trifluorométhylphénoxy)-6-nitro-phényl-N'-méthyl-sulfamide ou N-3-(2'-chloro-4'-trifluorométhylphénoxy)-6-nitro-phényl-N'-Isopropyl-sulfamide.

9. Herbicide contenant un diphényléther choisi dans le groupe constitué de N-3-(2'-chloro-4'-trifluorométhyl-phénoxy)-6-nitro-phényl-sulfamide, N-3-(2'-chloro-4'-trifluorométhylphénoxy)-6-nitro- phényl-N'-méthyl-sulfamide ou N-3-(2'-chloro-4'-trifluorométhylphénoxy)-6-nitro-phényl-N'-isopropyl- sulfamide.

## Revendications (Revendications pour l'(les) Etat(s) contractant(s) suivant(s) : AT)

1. Herbicide contenant un diphényléther de formule 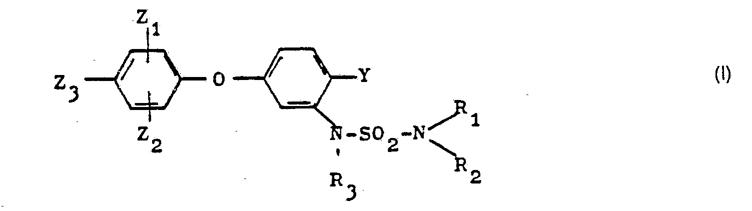 dans laquelle
Z₁ et Z₂ représentent chacun, indépendamment l'un de l'autre, hydrogène, nitro, cyano, carboxyle, alkyle inférieur, halogénoalkyle inférieur, ou alcoxy inférieur,
Z₃ représente halogène, nitro, cyano, alkyle inférieur, halogénoalkyle inférieur, alcoxy inférieur, halogénoalcoxy inférieur, alkylmercapto inférieur, halogénoalkylmercapto inférieur, alkylsulfinyle inférieur, halogénoalkylsulfinyle inférieur, alkylsulfonyle inférieur, ou halogénoalkylsulfonyle inférieur,
Y représente halogène, cyano ou nitro,
R₁ hydrogène, alkyle inférieur, cycloalkyle, alcoxy inférieur, halogénoalkyle inférieur ou alcoxyalkyle inférieur,
R₂ hydrogène, alkyle inférieur, acyle ou un atome de métal alcalin et
R₃ hydrogène, alkyle inférieur, ou un atome de métal alcalin.

2. Herbicide selon la revendication 1, caractérisé par le fait que
Z₁ et Z₂ représentent hydrogène, chlore, brome ou cyano,
Z₃ chlore, brome, trifluorométhyle ou méthyle,
Y nitro, halogène ou cyano,
R₁ hydrogène ou alkyle inférieur,
R₂ hydrogène ou alkyle inférieur et
R₃ hydrogène.

3. Herbicide contenant un support solide ou liquide et un diphényléther selon la revendication 1.

4. Herbicide de préparation d'un herbicide, caractérisé par le fait qu'on mélange un support solide ou liquide et un diphényléther selon la revendication 1.

5. Herbicide de lutte contre les plantes indésirables, caractérisé par le fait qu'on traite les plantes ou le sol avec un diphényléther selon la revendication 1.

6. Herbicide de préparation d'un diphényléther selon la revendication 1, caractérisé par le fait qu'on fait réagir, dans un solvant organique inerte à des températures comprises entre - 80 °C et + 100 °C, un diphényléther de formule générale II 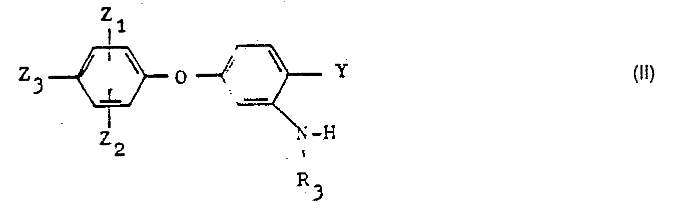 dans laquelle Z_{1'} Z₂, Z₃, R₃ et Y ont les significations indiquées dans la revendication 1, avec un halogène d'acide sulfamidique de formule générale III 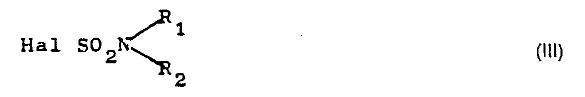 dans laquelle R₁ et R₂ ont les significations indiquées dans la revendication 1, et Hal représente un atome d'halogène.

7. Herbicide, contenant un diphényléther choisi dans le groupe constitué de N-3-(2'-chloro-4'-trifluorométhyl-phénoxy)-6-nitro-phényl-sulfamide, N-3-(2'-chloro-4'-trifluorométhylphénoxy)-6-nitro- phényl-N'-méthyl-sulfamide ou N-3-(2'-chloro-4'-trifluorométhylphénoxy)-6-nitro-phényl-N'-isopropyl- sulfamide.
